# EUROPEAN PATENT SPECIFICATION

(11) **EP 2 306 567 B1**
(45) Date of publication and mention of the grant of the patent: **26.03.2014**
(21) Application number: 09726426.1
(22) Date of filing: 10.04.2009
(51) Int. Cl.: H01M 8/02, H01M 8/10, H01M 8/24

(54) **FUEL CELL**
BRENNSTOFFZELLE
PILE À COMBUSTIBLE

(30) Priority: 28.05.2008 JP 2008140111
(43) Date of publication of application: 06.04.2011
(73) Proprietor: Panasonic Corporation, Kadoma-shi Osaka 571-8501 (JP)
(72) Inventor: KAWABATA, Norihiko, 2-1-61, Shiromi, Chuo-ku, Osaka-shi, Osaka 540-6207 (JP); KUSAKABE, Hiroki, 2-1-61, Shiromi, Chuo-ku, Osaka-shi, Osaka 540-6207 (JP); MATSUMOTO, Toshihiro, 2-1-61, Shiromi, Chuo-ku, Osaka-shi, Osaka 540-6207 (JP); NAGAI, Hiroyuki, 2-1-61, Shiromi, Chuo-ku, Osaka-shi, Osaka 540-6207 (JP); NAGAO, Yoshiki, 2-1-61, Shiromi, Chuo-ku, Osaka-shi, Osaka 540-6207 (JP)
(74) Representative: Grünecker, Kinkeldey, Stockmair & Schwanhäusser
(86) International application number: PCT/JP2009/001671
(87) International publication number: WO 2009/144871

(56) References cited:
- EP-A1- 1 094 535
- EP-A2- 1 511 103
- WO-A1-01/59864
- WO-A1-2007/129642
- WO-A1-2008/001755
- DE-A1- 10 203 174
- JP-A- 2002 124 275
- US-A1- 2005 079 400

## Description

### Technical Field

The present invention relates to a solid polymer fuel cell that uses a solid polymer electrolyte membrane.

### Background Art

A fuel cell that uses a solid polymer electrolyte membrane simultaneously generates electric power and heat by causing an electrochemical reaction between a hydrogen-containing fuel gas and an oxygen-containing oxidizing gas such as air. Basic members of such a fuel cell are a polymer electrolyte membrane that selectively transports hydrogen ions, and a pair of electrodes sandwiching the polymer electrolyte membrane. The electrode is often composed of a catalyst layer containing as a main component carbon particles carrying platinum group metal catalyst thereon, and of a gas diffusion layer that is both breathable and electronically conductive provided on the outer side of the catalyst layer.

To prevent supplied fuel gas and oxidizing gas from leaking out, or the two kinds of gas from intermixing, a gas sealant or gasket sandwiching the polymer electrolyte is provided around the electrodes. This sealant or gasket is assembled beforehand together with the electrodes and polymer electrolyte membrane as an integral unit. This assembly is called an MEA (Membrane Electrode Assembly).

Furthermore, a conductive separator is provided on both surfaces of the MEA in order to secure the MEA mechanically and also electrically connect adjacent MEAs in series. In a separator surface in contact with an MEA, a channel is formed for supplying reactive gas to the electrode surface and carrying away water and excess gas produced by the reaction. A channel may be provided in a separate member from a separator, but is generally formed by providing a groove in the surface of a separator.

Since a fuel cell generates heat during operation, cooling by providing a flow of cooling water is necessary in order to maintain a fuel cell at an appropriate temperature. Normally, a cooling section in which cooling water flows is provided for every one to three unit fuel cells. A separate cooling member may be provided between separators, or a cooling water channel may be provided in the rear surface of a separator (the surface not in contact with an electrode), the latter case being more common.

Normally, a typical stack-structure fuel cell is obtained by sandwiching a stack of between 10 and 200 unit fuel cells (each including an MEA, a pair of separators, and a cooling section as necessary) between end plates via a collector plate and insulator plate, and fastening this assembly with fastening bolts.

Separators of a solid polymer fuel cell must be highly conductive, highly hermetic with respect to a fuel gas, and highly corrosion-resistant with respect to a redox reaction of hydrogen or oxygen. For these reasons, a separator is normally made of carbon material such as glassy carbon or expanded graphite, and a reactive gas channel is formed by cutting or molding of the carbon material.

However, the cost of the carbon material itself is high, and it is also difficult to reduce the time needed to form a complex reactive gas channel by cutting or molding the carbon material. These factors have hindered the practical use of carbon-material separators.

Consequently, in recent years stainless-steel or suchlike metal separators have been developed instead of carbon-material separators. With a metal separator, grooves and ribs are formed alternately on the surface by means of press molding.

In comparison with a carbon separator, a metal separator has a waveform cross-section, making it prone to gas leakage at the end of a channel, and to intermixing of the gases. Consequently, some kind of contrivance is necessary to prevent gas leakage.

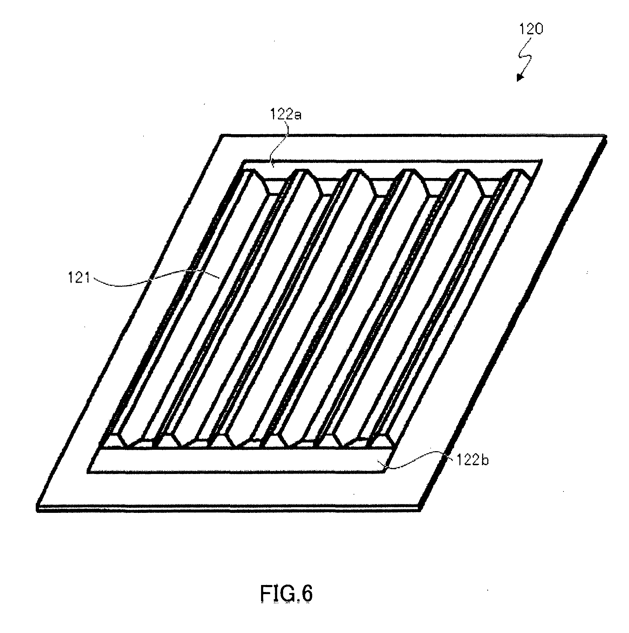

One contrivance that has been proposed to prevent gas leakage, as illustrated in FIG.6, is metal separator 120 having a pair of header sections 122a and 122b provided at both ends in the lengthwise direction of waveform (concavo-convex) channel 121, shallower than the depth of a concave part and lower than the height of a convex part (see Patent Document 1). A sealant (not shown) is provided to make these header sections 122a and 122b a closed space, and an oxidizing gas and fuel gas are passed through the waveform channel without leakage.

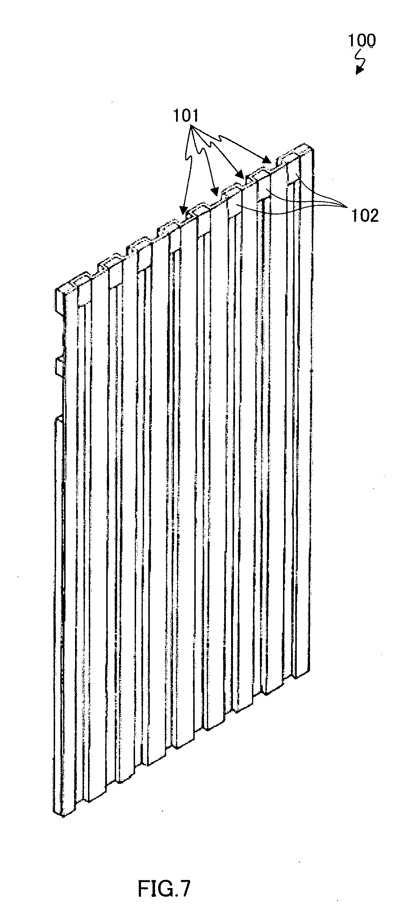

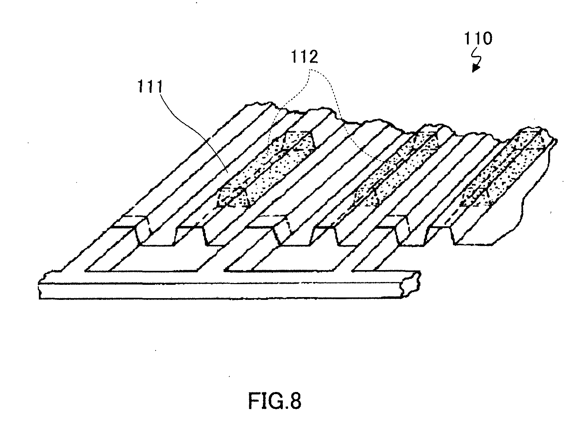

Another contrivance that has been proposed to prevent gas leakage, as illustrated in FIG.7, is to seal grooves on the rear side of metal separator 100 with sealants 102 at the channel ends of gas channel 101 (see Patent Document 2). Another proposition that has been made, as illustrated in FIG.8, is to seal grooves on the rear side of metal separator 110 with rubber sheets 112 at positions near the channel ends of gas channel 111 (see Patent Document 3). By such means, leakage at the channel end of a gas channel is suppressed and thereby reactive gas intermixing is prevented.

Thus, heretofore, a sealant or rubber sheet has been tightly fitted into grooves defining a channel in order to prevent gas leakage at the channel ends of a thin-sheet metal separator. However, since the internal pressure of a fuel cell varies according to the drive state of the fuel cell, the sealing state of sealant 102 (FIG.7) or rubber sheet 112 (FIG.8) also varies according to the drive state of the fuel cell. Nevertheless, the aforementioned sealing properties must be maintained even when the pressure difference between a sealed channel and another channel or the ambient air is at a maximum. Normally, the amount of gas leakage is required not to exceed 20 SCCM even when a pressure difference of 150 kPa occurs.

Consequently, a fuel cell that uses metal separators requires the stack to be fastened with great force. A resultant problem has been a large size of end plates and bolt structures for fastening the stack, tending to increase cost and weight.

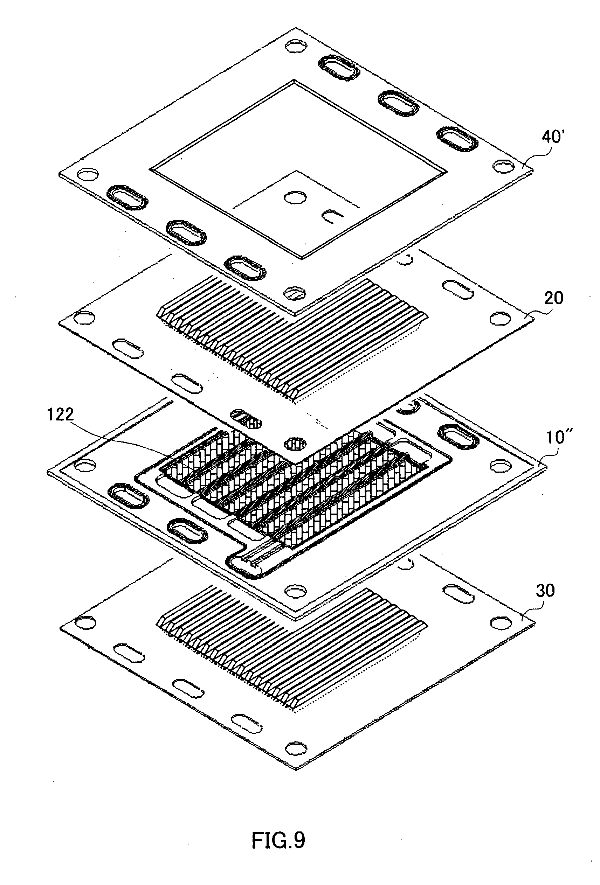

Furthermore, a contrivance has been proposed to prevent reactive gas leakage at the channel ends of a metal manifold, as illustrated in FIG.9, by extending the sealant of an MEA (see reference numeral 122 in FIG.9) and fitting the extended seal part into a separator channel (see Patent Document 4). This extended seal part appropriately regulates fluid flow in the channel. However, this extended seal part electrically insulates a separator from an electrode, and therefore a contact area between an extended seal and an electrode does not contribute to current passage, overall contact resistance increases, and output voltage falls. As a result, there is a problem of power generation efficiency falling for an overall fuel cell system. Also, when MEAs and separators are stacked, an extended seal may not fit into a channel properly and thus displacement may occur.

Patent Document 1: Japanese Patent Application Laid-Open No.2003-203644
Patent Document 2: International Application WO01/059864
Patent Document 3: Japanese Patent Application Laid-Open No.2000-133291
Patent Document 4: Japanese Patent Application Laid-Open No.2002-124275

US 2005/0079400 A1 describes a seal member that is formed integrally on surfaces of a metal separator of a fuel cell. The seal member includes an outer seal and an inner seal provided on a surface of the metal separator. A plurality of closure seals are formed integrally with an inner edge of the inner seal. The closure seals close a space between the inner seal and a protrusion forming a fuel gas flow field. This document does not however teach the feature of the present invention which is to bring the sealant in contact with a lengthwise end surface of the rib of the anode and/or cathode separators to prevent reactive gas intermixing without requiring excessive fastening force.

### Disclosure of Invention

### Problems to be Solved by the Invention

As stated above, in order to achieve practical use of a fuel cell that uses metal separators, a contrivance is necessary to prevent reactive gas intermixing by suppressing gas leakage in the gas channel ends of a metal separator. There is also a demand for gas leakage to be prevented reliably and easily by suppressing displacement when MEAs and separators are stacked. Thus, it is an object of the present invention to provide a fuel cell using metal separators in which reactive gas leakage is reliably suppressed without requiring excessive fastening force, while employing a simple structure.

In accordance with the present invention, the foregoing objectives are realised as defined in the independent claims. Preferred embodiments are defined in the dependent claims.

### Means for Solving the Problem

Specifically, the present invention relates to a unit fuel cell shown below, or a fuel cell including a stack thereof.
[1] A solid polymer unit fuel cell including:
   a frame holding therein a polymer electrolyte membrane, and a fuel electrode and oxygen electrode sandwiching the polymer electrolyte membrane;
   an anode separator which is stacked on the fuel electrode and has a channel that supplies and exhausts a fuel gas; and
   a cathode separator which is stacked on the oxygen electrode and has a channel that supplies and exhausts an oxidizing gas, wherein:
      central parts of the anode separator and cathode separator face the fuel electrode and oxygen electrode, have grooves and ribs formed alternately on the front and rear, have a waveform cross-section of uniform thickness, and have a linear channel;
      peripheral parts of the anode separator and cathode separator are flat structures having a manifold hole;
      on both sides of the frame, a concave part for doubling-back of a channel on the anode separator or cathode separator is formed, and a sealant that regulates a flow of a fuel gas or oxidizing gas is provided, the sealant being provided around the fuel electrode or oxygen electrode and being in contact with ribs at the boundary between a central part and peripheral part of the anode separator or cathode separator; and
      contact surfaces of the sealant and the ribs are respectively inclined with respect to a stacking direction from the frame toward the anode separator or cathode separator.
[2] A solid polymer fuel cell including a stack of a plurality of unit fuel cells according to [1], and a spacer frame provided between the unit fuel cells for providing a flow of cooling water in the separator channel between the unit fuel cells, wherein:
   on both sides of the spacer frame, a sealant is formed that regulates a flow of cooling water, the sealant being in contact with ribs at the boundary between the central part and peripheral part of the anode separator or cathode separator; and
   contact surfaces of the sealant and the ribs are respectively inclined with respect to a stacking direction from the spacer frame toward the anode separator or cathode separator.
[3] A solid polymer fuel including a stack of a plurality of unit fuel cells according to [1], and a spacer frame which is provided between the unit fuel cells and does not provide a flow of cooling water in the separator channel between the unit fuel cells, wherein:
   on both sides of the spacer frame, a sealant is formed that is in contact with ribs at the boundary between a central part and peripheral part of the anode separator or cathode separator; and
   contact surfaces of the sealant and the ribs are respectively inclined with respect to a stacking direction from the spacer frame toward the anode separator or cathode separator.
[4] A solid polymer unit fuel cell comprising:
   a frame holding therein a polymer electrolyte membrane, and a fuel electrode and oxygen electrode sandwiching the polymer electrolyte membrane;
   an anode separator which is stacked on the fuel electrode and has a channel that supplies and exhausts a fuel gas; and
   a cathode separator which is stacked on the oxygen electrode and has a channel that supplies and exhausts an oxidizing gas, wherein:
      central parts of the anode separator and cathode separator face the fuel electrode and oxygen electrode, have grooves and ribs formed alternately on the front and rear, have a waveform cross-section of uniform thickness, and have a serpentine channel;
      peripheral parts of the anode separator and cathode separator are flat structures having a manifold hole;
      on both sides of the frame, a sealant that regulates a flow of a fuel gas or oxidizing gas is provided, the sealant being provided around the fuel electrode or oxygen electrode and being in contact with ribs at the boundary between a central part and peripheral part of the anode separator or cathode separator; and
      contact surfaces of the sealant and the ribs are respectively inclined with respect to a stacking direction from the frame toward the anode separator or cathode separator.

### Advantageous Effects of Invention

According to a solid polymer fuel cell of the present invention, despite the use of metal separators, if a stack is fastened with normal force the amount of gas leakage can be maintained at 20 SCCM or below, and gas intermixing can be suppressed, even when a large pressure difference (for example, 150 kPa) occurs. Furthermore, positioning is made easy upon stacking MEAs and separators, so that displacement is less likely to occur.

### Brief Description of Drawings

FIG.1A is a bird's-eye view of an MEA-holding frame, anode separator, cathode separator, and spacer frame of a unit fuel cell of Embodiment 1, showing the state of the unit fuel cell before stacking;
FIG. 1B is a cross-sectional drawing of a stack in which two fuel cells such as shown in FIG.1A are stacked;
FIG.2 is a bird's-eye view of an MEA-holding frame, anode separator, cathode separator, and spacer frame of a unit fuel cell of Embodiment 2, showing the state of the unit fuel cell before stacking;
FIG.3 is a bird's-eye view of an MEA-holding frame, anode separator, cathode separator, and spacer frame of a unit fuel cell of Embodiment 3, showing the state of the unit fuel cell before stacking;
FIG.4A is a bird's-eye view of an MEA-holding frame, anode separator, cathode separator, and spacer frame of a unit fuel cell of Embodiment 4, showing the state of the unit fuel cell before stacking;
FIG.4B shows mutual contact surfaces of the anode separator and spacer frame in FIG.4A;
FIG.4C shows mutual contact surfaces of the MEA-holding frame and anode separator in FIG.4A;
FIG.4D shows mutual contact surfaces of the cathode separator and spacer frame in FIG.4A;
FIG.4E is a cross-sectional drawing of the fuel cell in FIG.4;
FIG.4F is a cross-sectional drawing of the fuel cell in FIG.4;
FIG.5A is a drawing showing cross-section A of the spacer frame in FIG.1, FIG.5B is a drawing showing cross-section B of the separators in FIG.1, FIG.5C is a drawing showing cross-section C of the separators in FIG.1, and FIG.5D is a drawing showing cross-section D of the MEA-holding frame in FIG.1, in which part of the member included therein is inclined with respect to the stacking direction;
FIG.6 is a drawing showing a conventional metal separator;
FIG.7 is a drawing showing a conventional metal separator;
FIG.8 is a drawing showing a conventional metal separator;
FIG.9 is a bird's-eye view of an MEA-holding frame, anode separator, cathode separator, and spacer frame of a comparative example of a unit fuel cell, showing the state of the unit fuel cell before stacking; and
FIG.10 is a drawing showing how a fuel cell stack is fabricated by fastening a stack of a plurality of unit fuel cells.

### Best Mode for Carrying Out the Invention

### 1. Unit fuel cell of the present invention

A unit fuel cell of the present invention has 1) a frame holding therein a polymer electrolyte membrane, and a fuel electrode and oxygen electrode sandwiching the polymer electrolyte membrane; 2) an anode separator having a channel that supplies and exhausts a fuel gas, stacked on the fuel electrode; and 3) a cathode separator having a channel that supplies and exhausts an oxidizing gas, stacked on the oxygen electrode; and is called a "solid polymer fuel cell" or the like.

### Anode separator and cathode separator

It is desirable for an anode separator and cathode separator of a unit fuel cell of the present invention to be metallic separators (also called "metal separators"). A cross-section of a metal separator has a waveform shape, and grooves and ribs are formed alternately on the surface of the separator. The thickness of the metal separator is approximately uniform, and the thickness of the waveform cross-section is also approximately uniform. That is to say, grooves and ribs are formed alternately on a first surface of a metal separator, and ribs and grooves are formed on the rear of the first surface at places corresponding to those grooves and ribs. A metal separator can be fabricated by stamping a metal plate into a waveform shape. Of the grooves and ribs formed on a separator, a fluid (fuel gas, oxidizing gas, or cooling water) is made to flow in the grooves. That is to say, the grooves become a separator channel.

A channel is formed--that is, grooves and ribs are formed--in the central part of an anode separator and cathode separator, while the peripheral part is a flat area in which manifold holes are formed without a channel. A manifold hole is a hole for forming a fuel cell manifold, through which a fuel gas, oxidizing gas, or refrigerant (for example, cooling water) flows.

The central part of a separator in which a channel is formed faces an electrode (fuel electrode or oxygen electrode) of an MEA held within a frame described later herein, and should preferably have a shape and area identical to those of that electrode surface.

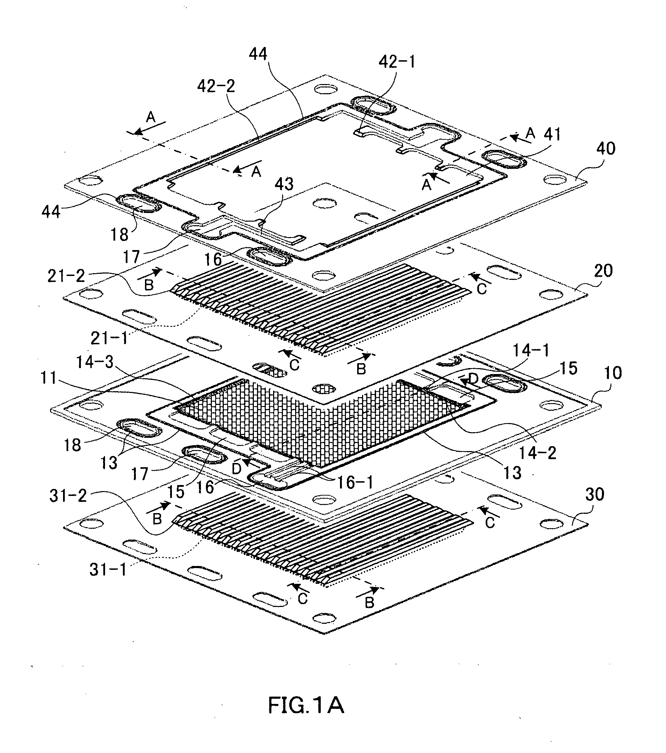

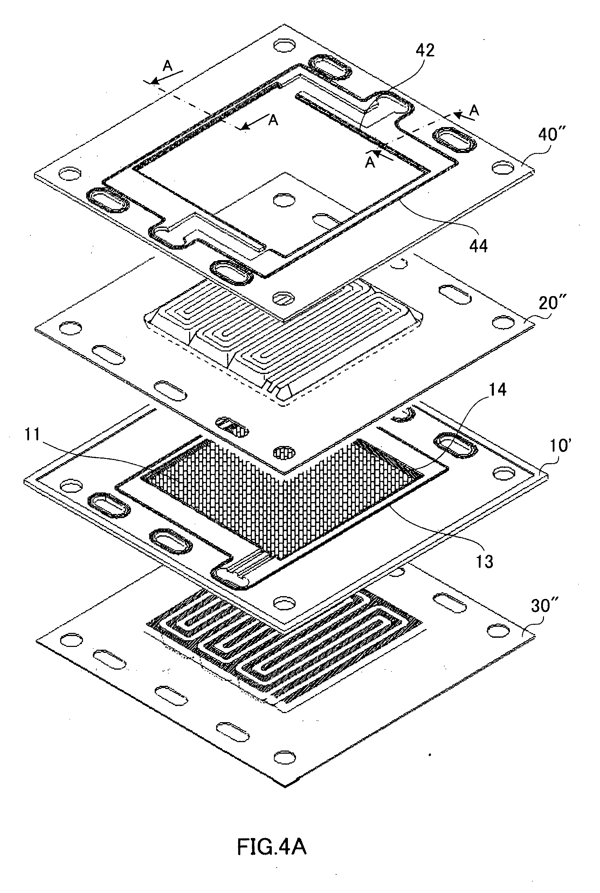

A channel formed in the central part of a separator may be linear (see FIG.1A, etc.), or may be serpentine (see FIG.4A, etc.). When a channel formed in the central part of a separator is linear, it is necessary for a concave part for channel doubling-back to be formed in the frame (described later herein) holding the MEA (see reference numeral 15 in FIG.1A).

On the other hand, when a channel formed in the central part of a separator is serpentine, the channel itself doubles back, and therefore it is not necessary to provide a member (concave part) for channel doubling-back in the frame (described later herein) holding the MEA (see FIG.4A). If a channel is made serpentine, possible gas leakage at places other than an opening connecting the manifold hole to the channel can be reliably prevented.

An anode separator is stacked on a fuel electrode. Fuel gas is made to flow over the anode separator through the channel that is in contact with the fuel electrode. On the other hand, a cathode separator is stacked on an oxygen electrode. Oxidizing gas is made to flow over the cathode separator through the channel that is in contact with the oxygen electrode.

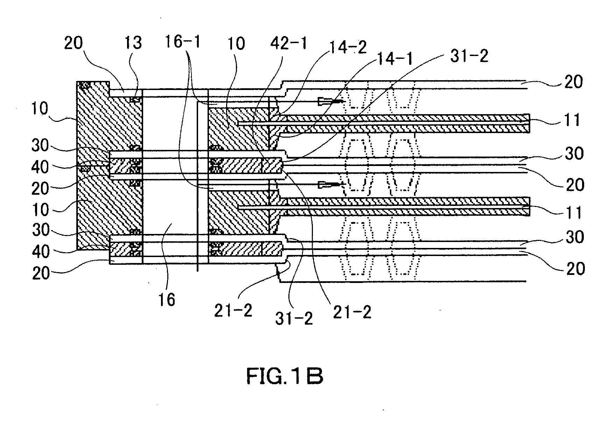

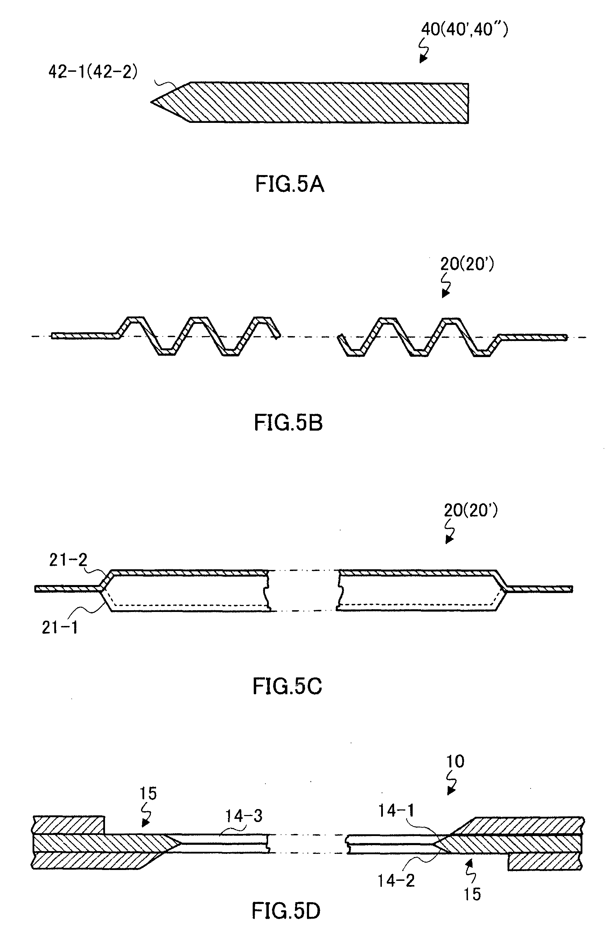

It is desirable that at least a part of the ribs at the boundary between the central part and peripheral part be inclined rather than perpendicularly to the separator surface (see FIG.1, FIG.5B, and FIG.5C). For example, as shown in FIG.1A, a "rib lengthwise end surface (see FIG.5C)" and "rib side surface (see FIG.5B)" are inclined to the separator surface. It is desirable for at least a "rib lengthwise end surface" to be inclined to the separator surface. This is in order to suppress gas leakage from a channel end without fastening with excessive force. It is, of course, preferable for a "rib side surface" also to be inclined. This is because positioning is made easier when stacking a separator on an MEA.

The ribs at the boundary between the central part and peripheral part of a separator contact the sealant (see reference numeral 14 in FIG.1A and FIG.1B, and FIG.5D) provided around an electrode (oxygen electrode or fuel electrode) of the frame (described later herein) holding the MEA. The sealant provided around an MEA electrode is also inclined, and the inclination angle corresponds to and matches the inclination angle of the rib.

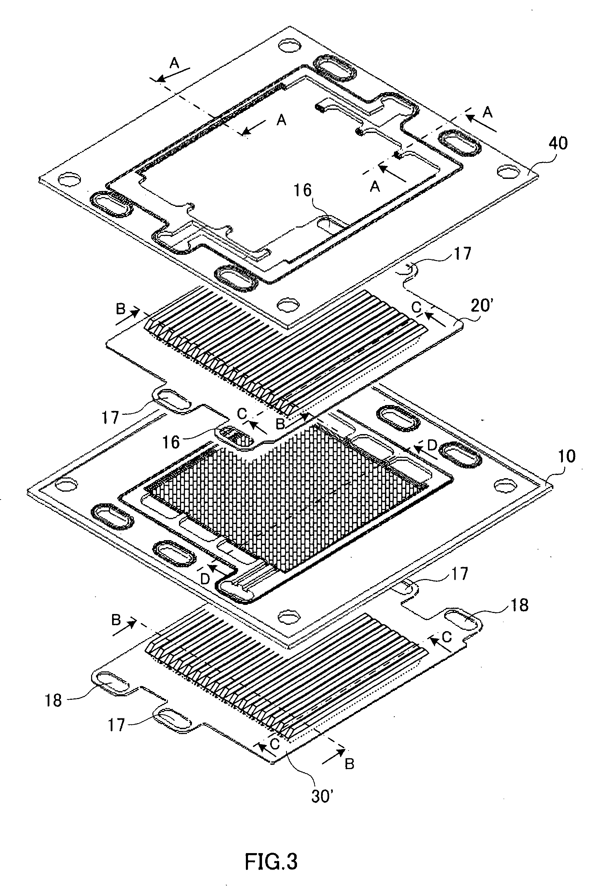

On the other hand, the peripheral part of a separator (the area surrounding the central part) is flat, and has manifold holes formed therein. It is desirable for at least a fuel gas manifold hole and a cooling water manifold hole to be formed in the peripheral part of an anode separator, whereas an oxidizing gas manifold hole may be provided (see FIG.1A, etc.) but need not be provided (see FIG.3). Also, it is desirable for at least an oxidizing gas manifold hole and a cooling water manifold hole to be formed in the peripheral part of a cathode separator, whereas a fuel gas manifold hole may be provided (see FIG.1A, etc.) but need not be provided (see FIG.3). As shown in FIG.3, omitting a manifold hole reduces the volume of a metallic member of large specific gravity in comparison with the frame and MEA, enabling the fuel cell to be made lighter.

### MEA-holding frame

A frame holding an MEA holds therein a polymer electrolyte membrane, and a fuel electrode and oxygen electrode sandwiching the polymer electrolyte membrane. It is desirable for the solid polymer electrolyte membrane, together with the fuel electrode and oxygen electrode, to form an MEA by being stacked together into an integral entity, and for a frame to be provided around the MEA, and hold the MEA.

The interior of the frame holding the MEA has a shape and area identical to those of the above-described central part of a separator. That is to say, the electrodes (fuel electrode and oxygen electrode) exposed within the frame face the central part of a separator (the area in which a channel is formed).

A sealant is provided around the inner perimeter of the frame. That is to say, a sealant is provided around a fuel electrode or oxygen electrode held within the frame. Consequently, the sealant provided within the frame contacts ribs at the boundary between the central part and peripheral part of a separator.

A feature of the present invention is that at least part of the sealant provided within the frame (that is, the sealant provided around an electrode) is inclined. As stated above, since a rib at the boundary of the central part and peripheral part of a separator is inclined, the sealant contacting the rib is also inclined in accordance with the inclination of the rib. That is to say, when the "lengthwise end surface" of a rib formed in the central part of a separator is inclined, the sealant at a place in contact with the "lengthwise end surface" should be inclined, and if the "rib side surface" is inclined, the sealant at a place in contact with the "rib side surface" should be inclined.

If the contact surfaces of a "rib lengthwise end surface" and sealant in contact therewith are inclined, gas leakage from a channel end is effectively suppressed. Also, if the contact surfaces of a "rib side surface" and sealant in contact therewith are inclined, positioning of the MEA and separators is facilitated.

When a channel formed in the central part of a separator is linear, a "concave part for channel doubling-back" is formed in the frame holding the MEA (see reference numeral 15 in FIG.1A, etc.). A "concave part for channel doubling-back" is formed in a part within the frame corresponding to a channel end of a linear channel of a separator. A concave part for channel doubling-back regulates the flow of a fluid (reactive gas or cooling water) flowing in a channel so as to flow over the entirety of the electrode surface. A "concave part for channel doubling-back" can be divided into a plurality of areas in order to regulate fluid flow. In a part corresponding to a channel end of a channel of the frame holding the MEA shown in FIG.1A (see reference numeral 10), concave parts for channel doubling-back are formed in threes. Therefore, a fluid supplied to a channel from a supply manifold makes 3.5 round trips before being exhausted from the exhaustion manifold.

On the other hand, when a separator channel is serpentine, it is not necessary for a concave part for channel doubling-back to be formed in a frame holding an MEA.

A sealant that seals a channel from the outside or from another channel may also be formed in a frame holding an MEA, together with the sealant provided on the inner perimeter of the frame (see reference numeral 13 in FIG.1A). It is desirable for the sealant and frame to be integrally formed of the same material. Integral forming enables a compression set to be kept small by reducing the amount of deformation of the sealant, thereby improving the durability of the sealant.

### Relationship between separator ribs and sealant provided on the inner perimeter of a frame holding an MEA

As stated above, the sealant provided on the inner perimeter of a frame holding an MEA contacts ribs at the boundary between the central part and peripheral part of a separator of a unit fuel cell of the present invention. A feature of a unit fuel cell of the present invention is that these contact surfaces are not parallel, but inclined, with respect to the stacking direction of the unit fuel cell. To be more specific, the normal of these contact surfaces is toward the separator that is in contact, and toward the inner perimeter of the frame. In particular, it is desirable for the contact surfaces of a separator rib lengthwise end surface and frame sealant to be inclined with respect to the stacking direction from the frame toward the separator.

Although the inclination angle is not strictly defined, an inclination of 30 to 45 degrees with respect to the stacking direction is desirable.

The following effects are obtained by inclining contact surfaces with respect to the stacking direction of a unit fuel cell. 1) If a unit fuel cell is fastened with normal fastening force, the sealant provided on the inner perimeter of the frame can seal a separator channel more reliably. This is because inclining the contact surfaces makes it easier for fastening force to be conveyed uniformly over the entire contact surfaces of both the frame sealant and a separator rib. In particular, if the contact surfaces of a rib lengthwise end surface and sealant are inclined, the fluid seal is more reliable. 2) Positional displacement in a stack between a frame holding an MEA and a separator is unlikely to occur. This is because stacking at an incline facilitates appropriate positioning.

### 2. Fuel cell of the present invention

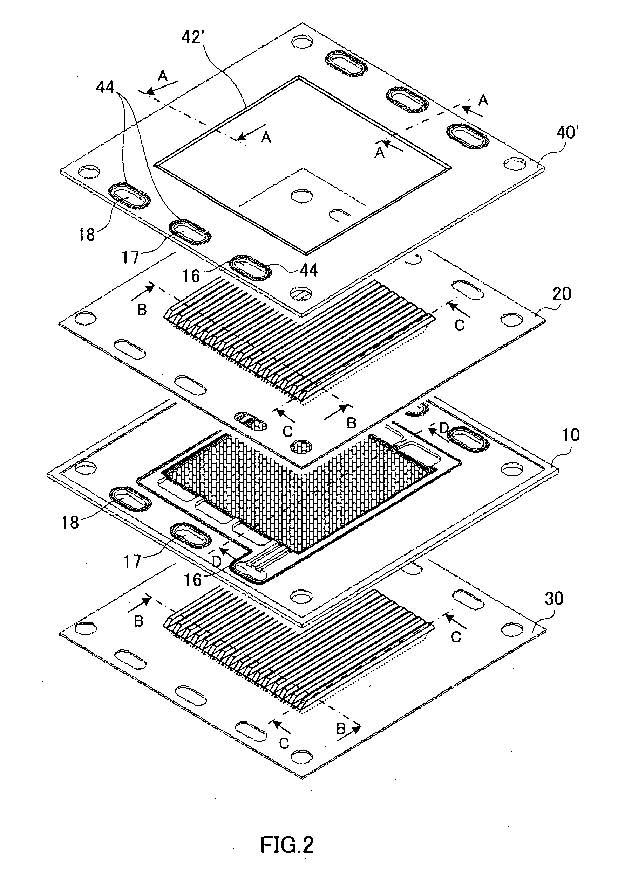

A fuel cell can be fabricated by stacking two or more unit fuel cells of the present invention. At this time, a "spacer frame" may be provided between unit fuel cells. A spacer frame has a cooling water manifold hole, and 1) may be a frame for providing a flow of cooling water from a cooling water manifold hole to a separator channel between unit cells (see FIG.1A), or 2) may be a frame that does not provide a flow of cooling water to a channel between unit cells (see FIG.2).

As shown in FIG.1A, a spacer frame for providing a flow of cooling water has a connecting channel for guiding cooling water to a separator channel formed in a surface not in contact with an electrode surface. On the other hand, as shown in FIG.2, a spacer frame that does not provide a flow of cooling water to a channel does not have a connecting channel between a cooling water manifold and a channel.

### Spacer frame

A spacer frame has a sealant provided on the inner perimeter of the frame, and that sealant is in contact with a rib at the boundary of the central part and peripheral part of a separator. It is desirable for the sealant and frame to be integrally formed of the same material.

As stated above, a rib at the boundary of the central part and peripheral part of a separator (at least, the lengthwise end surface of a linear rib) extends not perpendicular, but inclined, with respect to the plane of a separator. Therefore, it is desirable for the sealant provided on the inner perimeter of a spacer frame also to be inclined in accordance with a rib at the boundary of the central part and peripheral part of a separator. To be more specific, it is desirable for contact surfaces of spacer frame sealant and a rib at the boundary of the central part and peripheral part of a separator to be inclined with respect to the stacking direction, and for the normal of the contact surfaces to be toward the separator that is in contact, and toward the inner perimeter of the spacer frame. An inclination angle of approximately 30 to 45 degrees with respect to the stacking direction is desirable.

An anode separator is stacked on one side of a spacer frame, and a cathode separator on the other side. Therefore, it is desirable for the sealant provided on the inner perimeter of a spacer frame to be V-shaped (see FIG.1A, FIG.5A, etc.). By making the sealant V-shaped, contact surfaces with anode separator and cathode separator ribs can also be inclined.

As stated above, a spacer frame provided between unit cells may be a frame for providing a flow of cooling water to a separator channel between unit cells, or may be a frame that does not provide such a flow. A spacer frame for providing a flow of cooling water may be provided for every unit fuel cell, or may be provided every two or more unit fuel cells.

### Spacer frame for providing a flow of cooling water in a separator channel

When a channel formed in the central part of a separator is linear, it is desirable for a spacer frame for providing a flow of cooling water in a separator channel between unit cells to have a depression for doubling-back of cooling water flowing through the channel (see reference numeral 41 in FIG.1A). It is desirable for a depression for doubling-back of cooling water to regulate the flow of cooling water so as to flow successively over the entire surface. Consequently, a plurality of depressions for doubling-back is formed in the spacer frame as shown in FIG.1A. When a sealant forming a boundary of this depression for doubling-back contacts separator rib lengthwise end surfaces, a sealing effect is improved, and excessive fastening force becomes unnecessary.

Furthermore, having a spacer frame sealant (see reference numerals 42-1 and 42-2 in FIG.1A) and a separator rib come into contact at an incline makes positional displacement in a stack between a spacer frame and a separator unlikely to occur.

### Spacer frame that does not provide a flow of cooling water to a channel

Irrespective of the shape of a separator channel, it is desirable for a spacer frame that does not provide a flow of cooling water to a separator channel between unit cells to have a sealant in contact with ribs of the entire boundary of the central part and peripheral part of a separator (including a rib lengthwise end surface and rib side surface). If the contact surfaces of the spacer frame sealant and boundary ribs are inclined with respect to the stacking direction, a sealing effect is improved, and positioning is facilitated.

### (Embodiment 1)

FIG.1A shows the state, before stacking, of a unit fuel cell in which 1) a linear channel is formed in the central part and peripheral part of each separator, and a channel doubling-back section is formed in a frame holding an MEA, and 2) a spacer frame for providing a flow of cooling water in a separator channel provided between unit fuel cells is provided.

FIG.1A shows a bird's-eye view of a frame holding an MEA (MEA-holding frame) 10, anode separator 20, cathode separator 30, and spacer frame 40. FIG.5A shows cross-section A of spacer frame 40, FIG.5B shows cross-section B of separators 20 and 30, FIG.5C shows cross-section C of separators 20 and 30, and FIG.5D shows cross-section D of MEA-holding frame 10.

MEA-holding frame 10 can be fabricated by insertion molding of a frame made of polypropylene (220 mm (H) × 220 mm (W)) around MEA 11 (for example, 150 mm (H) × 150 mm (W)).

A plurality of concave parts 15 are formed in the frame of MEA-holding frame 10. Concave part 15 is an area for doubling-back of reactive gas flowing through a separator channel. Concave parts 15 are provided on both sides (the anode side and cathode side) of frame 10 (the cathode side is not shown).

MEA-holding frame 10 has sealants 14 (including 14-1, 14-2, and 14-3) provided on the inner perimeter of the frame (that is, provided around MEA 11 held in frame 10). In addition, MEA-holding frame 10 has sealant 13 that prevents gas leakage to the outside. Each sealant is formed by means of two-color molding of fluororubber.

Sealant 13 is provided around manifold holes 16 through 18 (fuel gas manifold hole 16, cooling water manifold hole 17, and oxidizing gas manifold hole 18), and MEA 11, so as to prevent gas leakage to the outside. Sealant 13 and sealants 14 are provided on both sides (the anode side and cathode side) of frame 10 (the anode side is not shown).

It is desirable for the thickness (height above the MEA) of some of sealants 14 (14-1 and 14-3) to be the same as the height of channels formed in separators 20 and 30 (the rib height). On the other hand, it is necessary for other sealants 14--that is, sealant 14-2 formed in concave parts 15 of frame 10, sealant 14 formed in connecting channel 16-1 to fuel gas manifold hole 16, and sealant 14 formed in a connecting channel (not shown) to oxidizing gas manifold hole 18, to be below the height of channels formed in the separators. This is in order to secure the flow of a reactive gas.

Sealants 14 (including 14-1, 14-2, and 14-3) are formed not parallel to, but at an incline to, the stacking direction of the respective members (10, 20, 30, and 40) (see FIG.5D), and are tapered. Specifically, sealants 14 are tapered and inclined with respect to the stacking direction from frame 10 holding the MEA toward each separator (anode separator 20 and cathode separator 30).

Anode separator 20 and cathode separator 30 have a plurality of linear grooves and ribs formed in their central parts. The end surfaces and side surfaces of the formed ribs extend from the separator surfaces not perpendicularly, but inclined by approximately 30 degrees from the perpendicular.

Anode separator 20 is stacked on the fuel electrode side of MEA-holding frame 10, and end 21-1 and a side surface of a rib of a channel formed on the anode side contact sealant 14 of MEA-holding frame 10. On the other hand, cathode separator 30 is stacked on the oxygen electrode side of MEA-holding frame 10, and end 31-1 and a side surface of a rib of a channel formed on the cathode side contact sealant 14 (not shown) of MEA-holding frame 10.

Spacer frame 40 is obtained by forming sealants 42 (including 42-1 and 14-2) on the inner perimeter of a frame made of polypropylene (for example, 210 mm (H) × 210 mm (W)) and forming sealant 44 around fuel gas manifold hole 16 and oxidizing gas manifold hole 18 and around the cavity in the frame of spacer frame 40. Sealant 44 prevents cooling water or reactive gas leakage to the outside. Each sealant is formed by means of two-color molding of fluororubber.

Sealant 42 provided on the inner perimeter of spacer frame 40 contacts the outer perimeter (end surfaces and side surfaces) of ribs formed in the central parts of anode separator 20 and cathode separator 30. Consequently, the sealant is not formed parallel to the stacking direction of the respective members (10, 20, 30, and 40), but in a V-shape (see FIG.5A).

FIG.1B is a cross-sectional drawing of the vicinity of channel ends (the vicinity of fuel gas manifold hole 16) of a stack in which two unit fuel cells such as shown in FIG.1A are stacked. As shown in FIG.1B, it is desirable for the outer frame of anode separator 20, cathode separator 30, and spacer frame 40 to be made smaller than the outer frame of MEA-holding frame 10. That is to say, it is desirable for a side surface of a unit fuel cell to be covered by the outer peripheral surface of MEA-holding frame 10 so that the outer peripheral surfaces of the separators (20 and 30) and spacer frame 40 are not exposed.

As shown in FIG.1B, when fuel cells are stacked, end 21-2 of a rib on the cooling water side of anode separator 20 contacts sealant 42-1 of spacer frame 40. Meanwhile, end 31-2 of a rib on the cooling water side of cathode separator 30 also contacts sealant 42-1 of spacer frame 40. Thus, sealant 42-1 is made V-shaped.

Fuel gas passes through connecting channel 16-1 from fuel gas manifold hole 16, and enters a channel of anode separator 20 (an area enclosed by MEA 11 and side surfaces of ribs of anode separator 20). On reaching concave part 15 of MEA-holding frame 10 (concave part 15 being a space defined by the outer perimeter of anode separator 20), the fuel gas changes direction by 180 degrees and flows into an adjacent channel. The fuel gas repeats this operation, and is exhausted from an exhaustion manifold hole (not shown).

In a similar way, oxidizing gas enters a channel of cathode separator 30 from oxidizing gas manifold hole 18, passes through the channel and is exhausted.

Cooling water passes through connecting channel 43 from cooling water manifold hole 17, and enters a channel of anode separator 20 (on the cooling water side). On reaching depression 41, the cooling water changes direction by 180 degrees and flows into an adjacent channel. The cooling water repeats this operation and is exhausted from cooling water manifold hole 17 (on the exhaustion side).

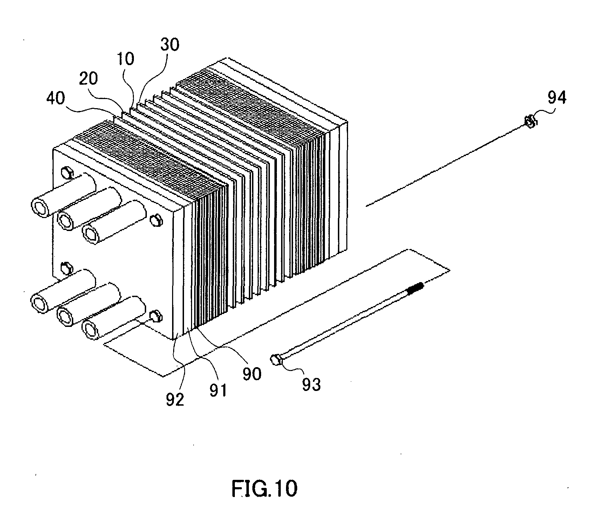

FIG. 10 shows how a fuel cell is made by sandwiching a stack of two or more unit fuel cells between collector plates. Each unit fuel cell includes MEA-holding frame 10, anode separator 20, cathode separator 30, and spacer frame 40. Specifically, a fuel cell (fuel cell stack) is obtained by sandwiching a stack of two or more unit fuel cells between collector plate 90, insulator plate 91, and end plate with pipes 92 at both ends, and fastening the stack with a bolt 93 and nut 94.

### (Embodiment 2)

FIG.2 shows the state, before stacking, of a unit fuel cell 1) in which a linear channel is formed in each separator and a channel doubling-back section is formed in an MEA-holding frame holding, and 2) which has a spacer frame that does not provide a flow of cooling water between unit fuel cells, provided between unit fuel cells.

FIG.2 shows a bird's-eye view of MEA-holding frame 10, anode separator 20, cathode separator 30, and spacer frame 40'. MEA-holding frame 10, anode separator 20, and cathode separator 30 are the same as in a unit fuel cell of Embodiment 1 (FIG.1A).

On the other hand, while the unit fuel cell shown in FIG.1A has spacer frame 40, the unit fuel cell shown in FIG.2 differs in having spacer frame 40'. That is to say, cooling water of a fuel cell of Embodiment 2 is not made to flow through a channel between stacked unit fuel cells, but instead, cooling water is made to flow along the outer perimeter of a unit fuel cell.

Spacer frame 40' has seals 44 around fuel gas manifold hole 16, cooling water manifold hole 17, and oxidizing gas manifold hole 18. Also, sealant 42' provided in the inner perimeter of spacer frame 40' also differs from sealants 42 (including 42-1 and 42-2) in FIG.1 in being provided on the entire inner perimeter of the frame of spacer frame 40'. Consequently, spacer frame 40' does not have a connecting channel between cooling water manifold hole 17 and a cooling water channel (see connecting channel 43 in FIG.1).

### (Embodiment 3)

FIG.3 shows the state, before stacking, of a unit fuel cell in which 1) a linear channel is formed in each separator, and a channel doubling-back section is formed in a frame holding an MEA, 2) a spacer frame for providing a flow of cooling water in a separator channel is provided between unit fuel cells, and 3) only either a fuel gas manifold hole or an oxidizing gas manifold hole is formed in each separator.

FIG.3 shows a bird's-eye view of MEA-holding frame 10, anode separator 20', cathode separator 30', and spacer frame 40. MEA-holding frame 10 and spacer frame 40 are the same as in a unit fuel cell of Embodiment 1 (FIG.1A).

On the other hand, the unit fuel cell shown in FIG.3 differs from a unit fuel cell having anode separator 20 and cathode separator 30 (FIG.1) in having anode separator 20' and cathode separator 30'. That is to say, while fuel gas manifold hole 16 and cooling water manifold hole 17 are formed in anode separator 20', there is no oxidizing gas manifold hole, and an area in which an oxidizing gas manifold hole should be formed has been eliminated. On the other hand, oxidizing gas manifold hole 18 and cooling water manifold hole 17 are formed in cathode separator 30', but there is no fuel gas manifold hole, and an area in which a fuel gas manifold hole should be formed has been eliminated.

### (Embodiment 4)

FIG.4A shows the state, before stacking, of a unit fuel cell in which 1) a serpentine channel is formed in each separator, and there is no channel doubling-back section in a frame holding an MEA, and 2) a spacer frame for providing a flow of cooling water in a separator channel is provided between unit fuel cells.

FIG.4A shows a bird's-eye view of MEA-holding frame 10', anode separator 20", cathode separator 30", and spacer frame 40".

A channel having a turn section from an inlet to an outlet is formed in an area (central part) corresponding to an electrode of the anode side of anode separator 20" and a cooling water side on the rear thereof, and the cathode side of cathode separator 30" and the cooling water side on the rear thereof. Consequently, MEA-holding frame 10' and spacer frame 40" do not have concave part 15 or depression 41 in FIG. 1 (areas for fluid doubling-back).

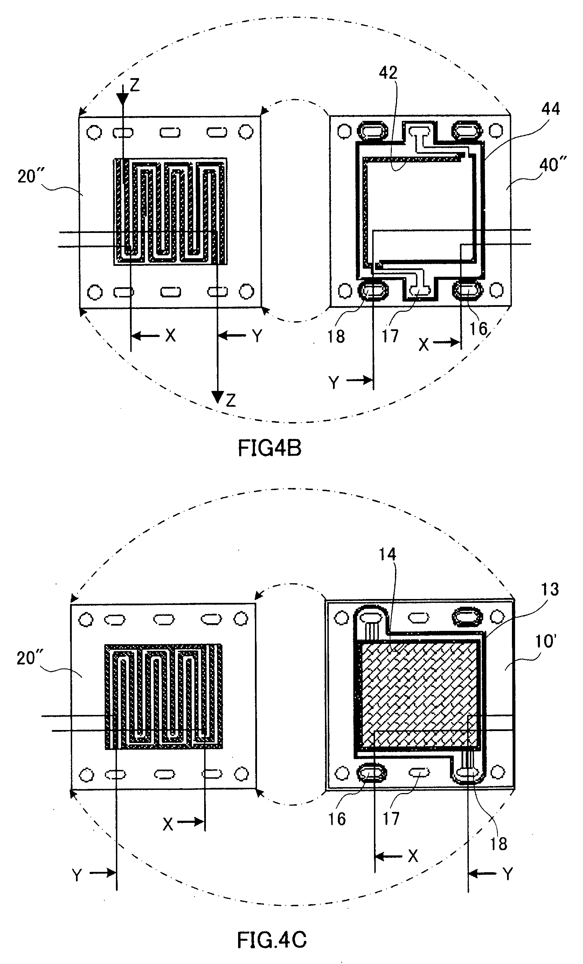

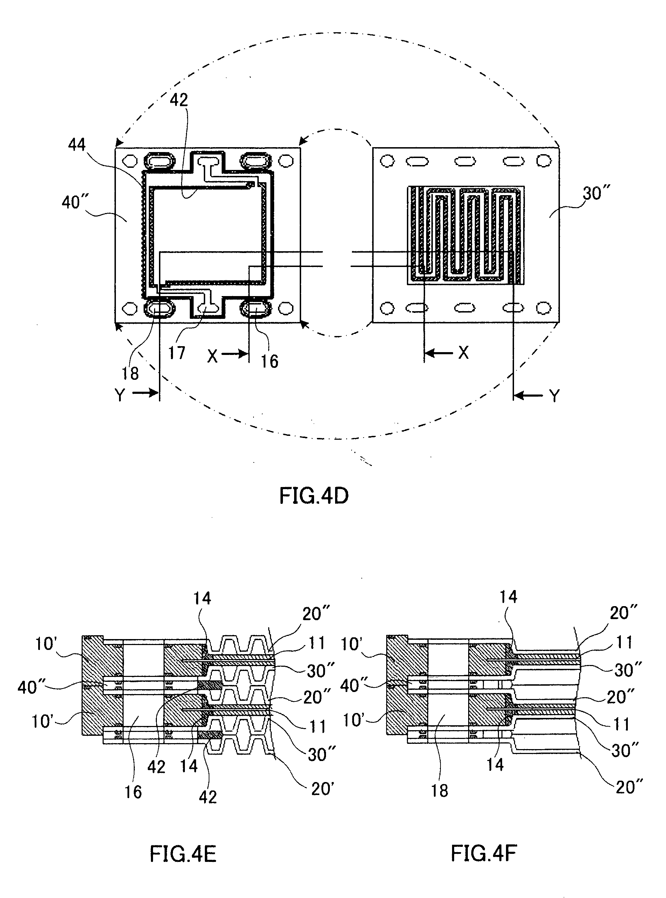

FIG.4B shows the cooling water channel side surface of anode separator 20" and the anode side surface of spacer frame 40". That is to say, FIG.4B shows mutual contact surfaces of anode separator 20" and spacer frame 40". Sealant 42 of spacer frame 40" is in contact with a rib at the boundary of the central part and peripheral part of anode separator 20". Arrow Z indicates the direction of flow of cooling water. FIG.4C shows the MEA side surface of anode separator 20" and the electrode surface of MEA-holding frame 10'. That is to say, FIG.4C shows mutual contact surfaces of anode separator 20" and MEA-holding frame 10'. Sealant 14 of MEA-holding frame 10' is in contact with a rib at the boundary of the central part and peripheral part of the separator. FIG.4D shows the cooling water channel side surface of cathode separator 30" and the cathode side surface of spacer frame 40". That is to say, FIG.4D shows mutual contact surfaces of cathode separator 30" and spacer frame 40". Sealant 42 of spacer frame 40" is in contact with a rib at the boundary of the central part and peripheral part of cathode separator 30".

FIG.4E and FIG.4F are cross-sectional drawings of a stack of two unit fuel cells (a stack of MEA-holding frames 10', anode separators 20", cathode separators 30", and spacer frame 40"). FIG.4E shows an X cross-section in FIG.4B through FIG.4D, and FIG.4F shows a Y cross-section in FIG.4B through FIG.4D.

### Examples

The present invention is described below with reference to examples, but the scope of the present invention is not limited to these.

### Example 1

An MEA-holding frame, anode separator, cathode separator, and spacer frame for providing a flow of cooling water corresponding to Embodiment 1 (FIG.1) were fabricated.

### Fabrication of MEA-holding frame

A cathode catalyst was obtained by attaching to acetylene black carbon particles 25wt% platinum particles with an average particle size of 30Å. Further, an anode catalyst was obtained by attaching to acetylene black carbon particles 25wt% platinum-ruthenium alloy particles with an average particle size of 30Å. These catalyst particles were dispersed in isopropyl alcohol and mixed with an ethyl alcohol dispersion of perfluorocarbon sulfonic acid resin particles to obtain a paste. The obtained pastes were applied to one side of a 250 µm thick carbon unwoven fabric using a screen printing method to form a catalyst layer. The amount of catalyst metal content in each of the obtained electrode catalyst layers was 0.3 mgc/m², and the amount of perfluorosulfonic acid content was 1.2 mgc/m². Apart from the catalyst material, the same fabrication was used for the obtained cathode electrode and anode electrode.

These electrodes were provided on either side respectively of the central part of a solid polymer electrolyte membrane having an area a size larger than the electrodes. A perfluorosulfonic acid thin film (thickness: 30 µm) was used as the solid polymer electrolyte membrane. Also, fluororubber sheets (thickness: 250 µm) cut to a predetermined size (155 mm × 155 mm) were provided on the peripheral part of both sides of the exposed solid polymer electrolyte membrane, sandwiching part of the electrode, and these components were joined into one by hot pressing, forming an MEA.

The MEA holding frame described in Embodiment 1 was fabricated using an MEA fabricated in this way.

### Fabrication of separators:

The central part (155 mm × 155 mm) of a 0.3 mm SUS316 plate (220 mm × 220 mm) was stamped so as to form a waveform with a 5.6 mm pitch (2.8 mm groove width). The groove depth (rib height) was made approximately 1 mm. Stamping was performed in such a way that the rolling direction of the SUS316 plate and the lengthwise direction of the waveform grooves were parallel.

The end surfaces and side surfaces of ribs formed on the central part of the SUS plate extended at an incline rather than perpendicularly from the surface of the SUS plate. Specifically, these faces were inclined by 30 degrees outward with respect to a vertical axis from the surface.

After stamping (first step) of the central part of the SUS plate, processing to smooth the peripheral part (flat surface) of the SUS plate, and punching to form manifold holes, were further simultaneously performed (second step).

Sealant was provided on the outer perimeter of the MEA held in the MEA-holding frame (that is, on the inner perimeter of the frame of the MEA-holding frame). The provided sealant was made to contact ribs (rib end surface and side surface) at the boundary between the central part and peripheral part of a separator. That is to say, a contact surface of a separator rib end surface or side surface was inclined by 30 degrees with respect to the stacking direction.

A 50-cell stack was made of unit fuel cells each comprising a stack composed of a cathode separator, MEA-holding frame, anode separator, and spacer frame for providing a flow of cooling water. The 50-cell stack was sandwiched by stainless steel plates via a collector plate comprising a copper plate with a gold-plated surface and an insulator plate made of polypropylene sulfide, and both end plates were fastened with a fastening rod. At this time, adjustment was performed by means of non-carbon paper so that the fastening pressure per electrode unit area was 100 N/cm². The total fastening force, comprising the compressive force on an electrode and the compressive force on the sealant, was 15 kN.

When a fuel gas channel, oxidizing gas channel, and cooling water channel were each pressurized with 150 kPa nitrogen gas, the amount of nitrogen gas leaking to the outside was 20 SCCM or below for all of the channels.

Hydrogen and air were supplied to the solid polymer fuel cell fabricated as described above at a hydrogen use rate of 70% and oxygen use rate of 20%, and a performance test was conducted. A cell temperature of 75 °C, hydrogen-side dew point of 80°C, and air-side dew point of 75 °C were used. As a result, 1050 W (35 V - 30 A) power output was obtained. When this output was made normal output (100%), it was necessary to supply hydrogen and air at a hydrogen use rate of 65% and oxygen use rate of 15% in order to obtain low output (approximately 50%)--that is, 525 W (35 V - 15 A) output.

### Comparative Example 1

A fuel cell was fabricated in the same way as described in Example 1, except that the separator shown in FIG.7 was used as an anode separator and cathode separator. However, an MEA-holding frame and spacer frame sealants (reference numerals 14 and 42 in FIG.1A) were omitted. In order to maintain the same kind of airtightness as in Example 1 when applying a fastening pressure of 100 N/cm² per electrode unit area, it was necessary to fit seals into the separator channel grooves (reference numeral 102 in FIG.7), and to apply a total fastening force of 50 kN.

Also, since the separator channels were linear, variance arose in the inflow of fuel gas and oxidizing gas to each channel, and there was a proneness to flooding at portions of the channel near the outer perimeter, especially during light load operation. Consequently, although normal output was obtained at a hydrogen use rate of 70% and oxygen use rate of 20%, as in Example 1, it was necessary to supply hydrogen and air at a hydrogen use rate of 60% and oxygen use rate of 12% in order to obtain low output.

### Comparative Example 2

A fuel cell was fabricated in the same way as described in Example 1, except that the separator shown in FIG.8 was used as an anode separator and cathode separator (MEA-holding frame and spacer frame sealants (reference numerals 14 and 42 in FIG.1A) were omitted). Separator channels were made serpentine. In order to maintain the same kind of airtightness as in Example 1 when applying a fastening pressure of 100 N/cm² per electrode unit area, it was necessary to fit seals into the separator channel grooves (reference numeral 112 in FIG.8), and to apply a total fastening force of 20 kN.

Since the separator channels were serpentine, variance in the inflow of fuel gas and oxidizing gas to each channel was not prone to occur, and there was less proneness to flooding during light load operation than in the case of Example 1. Normal output and low output were obtained at the same kind of gas use rates as in Example 1.

### Comparative Example 3

A fuel cell was fabricated in the same way as described in Example 1, except that the separators and MEA-holding frame shown in FIG.9 were used. Sealant 122 of a boundary part of MEA-holding frame channel groups was made an insulating member. A fastening force of 12 kN was necessary in order to maintain the same kind of airtightness as in Example 1 when applying a fastening pressure of 100 N/cm² per electrode unit area. However, since contact resistance increased, a predetermined voltage could not be obtained, and only 900 W (30 V - 30 A) output could be obtained when hydrogen and air were supplied at a hydrogen use rate of 70% and oxygen use rate of 20%. The effectiveness of Example 1 was confirmed in this way.

### Example 2

In Example 2, a unit fuel cell including a spacer frame for providing a flow of cooling water as described in Embodiment 1 (referred to as a "cooling unit cell") and a unit fuel cell including a spacer frame that does not provide a flow of cooling as described in Embodiment 2 (referred to as a "non-cooling unit cell") were stacked alternately, with a cooling unit cell at both ends. As in Example 1, the stack was fastened with a fastening rod.

Under a normal load, cooling water pressure loss was too great to maintain the stack temperature at a predetermined temperature, causing overall system power generation performance to fall. On the other hand, under a light load, variance in the cooling water flow rate at each stack location decreased since cooling water pressure loss was greater than in Example 1. Consequently, it was possible to prevent relative humidity falling, and power generation performance falling (voltage decreasing), in a unit cell in which the temperature was too high due to an inadequate cooling water flow rate. A voltage drop during 1,000 hours of power generation was reduced by 5% compared with

### Example 1.

Example 3

In Example 3, an MEA-holding frame and separators as described in Embodiment 3 (see FIG.3) were used.

The anode separator had only a part corresponding to an electrode, 5 mm around a fuel gas manifold hole, and 5 mm around a cooling water manifold hole, and a metal plate of a part in which an oxidizing gas manifold hole is formed was omitted. Similarly, the cathode separator had only a part corresponding to an electrode, 5 mm around an oxidizing gas manifold hole, and 5 mm around a cooling water manifold hole, and a metal plate of a part in which a fuel gas manifold hole is formed was omitted. By this means, the weight of a separator unit was decreased by 15%, and the weight of the entire stack by 11%, compared with Example 1.

As in Example 1, a stack in which unit fuel cells were stacked was fastened. The fastening pressure per electrode unit area at this time was 100 N/cm². The total fastening force, comprising the compressive force on an electrode and the compressive force on a seal, was 15 kN.

When a fuel gas channel, oxidizing gas channel, and cooling water channel were each pressurized with 150 kPa nitrogen gas, the amount of nitrogen gas leaking to the outside was 20 SCCM or below for all of the channels. Power generation performance was virtually the same as in Example 1.

### Example 4

In Example 4, an MEA-holding frame and separators as described in Embodiment 4 (see FIG.4A through FIG.4F) were used. Channels in the anode side and cooling water side of the anode separator, and channels in the cathode side and cooling water side of the cathode separator, are formed in a serpentine shape from the channel inlet to the channel outlet.

The contact distance between the tapered part of MEA-holding frame and spacer frame sealants and a separator rib is longer than in a unit fuel cell of Example 1, improving the sealing properties. In particular, flooding is not prone to occur under a light load, and whereas it was necessary to supply hydrogen and air at a hydrogen use rate of 65% and oxygen use rate of 15% in order to obtain low output of 525 W (35 V - 15 A) in Example 1, in Example 4 low output was obtained by providing a flow of hydrogen and air at a hydrogen use rate of 67% and oxygen use rate of 18%.

However, when an SUS316 plate was stamped into a serpentine shape, damage to a metal plate at a channel turn section was prone to occur. Consequently, while the separator fabrication yield was virtually 100% in Example 1, the separator fabrication yield for Example 4 was 85%.

### Industrial Applicability

A solid polymer unit fuel cell or fuel cell of the present invention, despite the use of metal separators, regulates the flow of gas flowing in a separator channel, and reliably prevents gas intermixing, without requiring excessive fastening force or causing increase in contact resistance. A solid polymer fuel cell of the present invention is suitable for use in a portable power supply, a power supply for electric cars, or a home cogeneration system, for example.

### Reference Signs List

10, 10', 10" MEA holding frame
11 MEA
13 Sealant
14-1, 14-2, 14-3 Sealant provided on inner perimeter of frame
15 Concave part for doubling-back
16 Fuel gas manifold hole
16-1 Connecting channel
17 Cooling water manifold hole
18 Oxidizing gas manifold hole
20, 20', 20" Anode separator
21-1, 21-2 Rib lengthwise end surface
30, 30', 30" Cathode separator
31-1, 31-2 Rib lengthwise end surface
40, 40', 40" Spacer frame
41 Depression for doubling-back
42, 42', 42-1, 42-2 Sealant provided on inner perimeter of frame
43 Connecting channel
44 Sealant
90 Collector plate
91 Insulator plate
92 End plate with pipes
93 Bolt
94 Nut
100, 110, 120 Metal separator
101, 111, 121 Separator channel
102, 112, 122 Sealant

## Claims

1. A solid polymer unit fuel cell comprising:
a frame (10) holding therein a polymer electrolyte membrane, and a fuel electrode and oxygen electrode sandwiching the polymer electrolyte membrane;
an anode separator (20) which is stacked on the fuel electrode and has a channel (16-1) that supplies and exhausts a fuel gas; and
a cathode separator (30) which is stacked on the oxygen electrode and has a channel that supplies and exhausts an oxidizing gas, wherein:
central parts of the anode separator (20) and cathode separator (30) face the fuel electrode and oxygen electrode, have grooves and ribs formed alternately on the front and rear, have a waveform cross-section of uniform thickness, and have a linear channel;
peripheral parts of the anode separator (20) and cathode separator (30) are flat structures having a manifold hole (16);
on both sides of the frame (10), a concave part for doubling-back of a channel on the anode separator (20) or cathode separator (30) is formed, and a sealant that regulates a flow of a fuel gas or oxidizing gas is provided, the sealant (13) being provided around the fuel electrode or oxygen electrode and being in contact with a lengthwise end surface of the rib (21-1, 31-1) of the anode separator (20) or cathode separator (30); and
contact surfaces of the sealant (13) and the ribs (21-1, 31-1) are respectively inclined with respect to a stacking direction from the frame (10) toward the anode separator (20) or cathode separator (30).

2. The solid polymer unit fuel cell according to claim 1, wherein a normal of a surface of the sealant (13) contacting the lengthwise end surface of the ribs (21-1, 31-1) of the anode separator (20) or cathode separator (30) is toward the separator being in contact, and toward an inner side of the frame (10).

3. The solid polymer unit fuel cell according to claim 1, wherein the anode separator (20) and cathode separator (30) are metallic separators.

4. A solid polymer fuel cell comprising a stack of a plurality of unit fuel cells according to claim 1.

5. A solid polymer fuel cell comprising:
a stack of a plurality of unit fuel cells according to claim 1; and
a spacer frame (40) provided between the unit fuel cells for providing a flow of cooling water in the separator channel (43) between the unit fuel cells, wherein:
on both sides of the spacer frame (40), a sealant (44) is formed that regulates a flow of cooling water, the sealant (44) being in contact with ribs (21-1, 31-1) at the boundary between the central part and peripheral part of the anode separator (20) or cathode separator (30); and
contact surfaces of the sealant (44) and the are respectively inclined with respect to a stacking direction from the spacer frame (40) toward the anode separator (20) or cathode separator (30).

6. A solid polymer fuel comprising:
a stack of a plurality of unit fuel cells according to claim 1; and
a spacer frame (40) which is provided between the unit fuel cells and does not provide a flow of cooling water in the separator channel (16-1) between the unit fuel cells, wherein:
on both sides of the spacer frame (40), a sealant (44) is formed that is in contact with ribs (21-1, 31-1) at the boundary between a central part and peripheral part of the anode separator (20) or cathode separator (30); and
contact surfaces of the sealant (44) and the ribs (21-1, 31-1) are respectively inclined with respect to a stacking direction from the spacer frame (40) toward the anode separator (20) or cathode separator (30).

7. The solid polymer unit fuel cell according to claim 1, wherein:
the anode separator (20) has a fuel gas manifold hole (16) and a cooling water manifold hole (17), and does not have an oxidizing gas manifold hole (18); and
the cathode separator (30) has an oxidizing gas manifold hole (18) and a cooling water manifold hole (17), and does not have a fuel gas manifold hole (16).

## Patentansprüche

1. Festpolymer-Einzelbrennstoffzelle, die umfasst:
einen Rahmen (10), in dem eine Polymerelektrolytmembran, und eine Brennstoff-Elektrode sowie eine Sauerstoff-Elektrode aufgenommen sind, zwischen denen die Polymerelektrolytmembran eingeschlossen ist;
einen Anoden-Separator (20), der auf die Brennstoffzelle geschichtet ist und einen Kanal (16-1) aufweist, der ein Brennstoffgas zuführt und abführt; und
einen Kathoden-Separator (30), der auf die Sauerstoff-Elektrode geschichtet ist und einen Kanal aufweist, der ein oxidierendes Gas zuführt und abführt, wobei:
mittige Teile des Anoden-Separators (20) und des Kathoden-Separators (30) der Brennstoff-Elektrode und der Sauerstoff-Elektrode zugewandt sind, Nuten und Rippen aufweisen, die abwechselnd an der Vorderseite und der Rückseite ausgebildet sind, einen wellenförmigen Querschnitt einheitlicher Dicke haben und einen geradlinigen Kanal aufweisen;
Randteile des Anoden-Separators (20) und des Kathoden-Separators (30) flache Strukturen mit einem Verteilerloch (16) sind;
an beiden Seiten des Rahmens (10) ein konkaver Teil zum Umkehren eines Kanals an dem Anoden-Separator (20) oder dem Kathoden-Separator (30) ausgebildet ist und ein Dichtungsmittel vorhanden ist, das einen Strom von Brenngas oder oxidierendem Gas reguliert, wobei das Dichtungsmittel (13) um die Brennstoff-Elektrode oder die Sauerstoff-Elektrode herum vorhanden ist und in Kontakt mit einer Endfläche der Rippe (21-1, 31-1) des Anoden-Separators (20) oder des Kathoden-Separators (30) in Längsrichtung in Kontakt ist; und
Kontaktflächen des Dichtungsmittels (13) und der Rippen (21-1, 31-1) jeweils in Bezug auf eine Schichtungsrichtung von dem Rahmen (10) zu dem Anoden-Separator (20) oder dem Kathoden-Separator (30) hin geneigt sind.

2. Festpolymer-Einzelbrennstoffzelle nach Anspruch 1, wobei eine Senkrechte einer Fläche des Dichtungsmittels (13), die mit der Endfläche der Rippen (21-1, 31-1) des Anoden-Separators (20) oder des Kathoden-Separators (30) in Längsrichtung in Kontakt ist, zu dem in Kontakt befindlichen Separator hin und zu einer Innenseite des Rahmens (10) hin gerichtet ist.

3. Festpolymer-Einzelbrennstoffzelle nach Anspruch 1, wobei der Anoden-Separator (20) und der Kathoden-Separator (30) aus Metall bestehende Separatoren sind.

4. Festpolymer-Brennstoffzelle, die einen Stapel einer Vielzahl von Einzellbrennstoffzellen nach Anspruch 1 umfasst.

5. Festpolymer-Brennstoffzelle, die umfasst:
einen Stapel einer Vielzahl von Einzelbrennstoffzellen nach Anspruch 1; und
einen Abstandshalterahmen (40), der zwischen den Einzelbrennstoffzellen vorhanden ist, um einen Strom von Kühlwasser in dem Separator-Kanal (43) zwischen den Einzelbrennstoffzellen zu ermöglichen, wobei:
an beiden Seiten des Abstandshalterahmens (40) ein Dichtungsmittel (44) ausgebildet ist, das einen Strom von Kühlwasser reguliert, und das Dichtungsmittel (44) an der Grenze zwischen dem Mittelteil und dem Randteil des Anoden-Separators (20) oder des Kathoden-Separators (30) in Kontakt mit Rippen (21-1-, 31-1) ist; und
Kontaktflächen des Dichtungsmittels (44) und der Rippen (21-1, 31-1) jeweils in Bezug auf eine Schichtungsrichtung von dem Abstandshalterahmen (40) zu dem Anoden-Separator (20) oder dem Kathoden-Separator (30) hin geneigt sind.

6. Festpolymer-Brennstoffzelle, die umfasst:
einen Stapel einer Vielzahl von Einzelbrennstoffzellen nach Anspruch 1; und
einen Abstandshalterahmen (40), der zwischen den Einzelbrennstoffzellen vorhanden ist und keinen Strom von Kühlwasser in dem Separator-Kanal (16-1) zwischen den Einzelbrennstoffzellen ermöglicht, wobei:
an beiden Seiten des Abstandshalterahmens (40) ein Dichtungsmittel (44) ausgebildet ist, das an der Grenze zwischen einem Mittelteil und einem Randteil des Anoden-Separators (20) oder des Kathoden-Separators (30) in Kontakt mit Rippen (21-1, 31-1) ist; und
Kontaktflächen des Dichtungsmittels (44) und der Rippen (21-1, 31-1) jeweils in Bezug auf eine Schichtungsrichtung von dem Abstandshalterahmen (40) zu dem Anoden-Separator (20) oder dem Kathoden-Separator (30) hin geneigt sind.

7. Festpolymer-Einzelbrennstoffzelle nach Anspruch 1, wobei:
der Anoden-Separator (20) ein Brenngas-Verteilerloch (16) sowie ein Kühlwasser-Verteilerloch (17) hat und kein Verteilerloch (18) für oxidierendes Gas hat; und
der Kathoden-Separator (30) ein Verteilerloch (18) für oxidierendes Gas sowie ein Kühlwasser-Verteilerloch (17) hat und kein Brenngas-Verteilerloch (16) hat.

## Revendications

1. Pile à combustible unitaire à polymère solide, comprenant :
une armature (10) supportant une membrane d'électrolyte polymère, ainsi qu'une électrode à combustible et une électrode à oxygène entre lesquelles est agencée la membrane d'électrolyte polymère ;
un séparateur d'anodes (20) qui est empilé sur l'électrode à combustible et comporte un canal (16-1) qui alimente et évacue un gaz combustible ; et
un séparateur de cathodes (30) qui est empilé sur l'électrode à oxygène et comporte un canal qui alimente et évacue un gaz oxydant,
dans laquelle :
des parties centrales du séparateur d'anodes (20) et du séparateur de cathodes (30) font face à l'électrode à combustible et à l'électrode à oxygène, comportent des rainures et des nervures formées alternativement à l'avant et à l'arrière, présentent une section transversale ondulée d'épaisseur uniforme, et comportent un canal linéaire ;
des parties périphériques du séparateur d'anodes (20) et du séparateur de cathodes (30) présentent des structures planes comportant un trou de collecteur (16) ;
des deux côtés de l'armature (10), une partie concave de retour d'un canal sur le séparateur d'anodes (20) ou le séparateur de cathodes (30) est formée, et un produit d'étanchéité qui régule l'écoulement d'un gaz combustible ou d'un gaz oxydant est pourvu, le produit d'étanchéité (13) étant pourvu autour de l'électrode à combustible ou de l'électrode à oxygène et étant en contact avec une surface terminale longitudinale de la nervure (21-1, 31-1) du séparateur d'anodes (20) ou du séparateur de cathodes (30) ; et
des surfaces de contact du produit d'étanchéité (13) et des nervures (21-1, 31-1) sont respectivement inclinées par rapport à une direction d'empilement de l'armature (10) vers le séparateur d'anodes (20) ou le séparateur de cathodes (30).

2. Pile à combustible unitaire à polymère solide selon la revendication 1, dans laquelle une normale à une surface du produit d'étanchéité (13) en contact avec la surface terminale longitudinale des nervures (21-1, 31-1) du séparateur d'anodes (20) ou du séparateur de cathodes (30) est dirigée vers le séparateur en contact avec un côté interne de l'armature (10) et vers celui-ci.

3. Pile à combustible unitaire à polymère solide selon la revendication 1, dans laquelle le séparateur d'anodes (20) et le séparateur de cathodes (30) sont des séparateurs métalliques.

4. Pile à combustible à polymère solide comprenant un empilement d'une pluralité de piles à combustible unitaires selon la revendication 1.

5. Pile à combustible à polymère solide, comprenant :
un empilement d'une pluralité de piles à combustible unitaires selon la revendication 1 ; et
une armature d'espacement (40) pourvue entre les piles à combustible unitaires pour procurer un écoulement d'eau de refroidissement dans le canal
séparateur (43) entre les piles à combustible unitaires, dans laquelle :
des deux côtés de l'armature d'espacement (40), un produit d'étanchéité (44) qui régule un écoulement d'eau de refroidissement est formé, le produit d'étanchéité (44) étant en contact avec des nervures (21-1, 31-1) à la délimitation entre la partie centrale et la partie périphérique du séparateur d'anodes (20) ou du séparateur de cathodes (30) ; et
des surfaces de contact du produit d'étanchéité (44) et des nervures sont respectivement inclinées par rapport à une direction d'empilement depuis l'armature d'espacement (40) vers le séparateur d'anodes (20) ou le séparateur de cathodes (30).

6. Pile à combustible à polymère solide, comprenant :
un empilement d'une pluralité de piles à combustible unitaires selon la revendication 1 ; et
une armature d'espacement (40) pourvue entre les piles à combustible unitaires et qui ne procure pas un écoulement d'eau de refroidissement dans le canal séparateur (16-1) entre les piles à combustible unitaires, dans laquelle :
des deux côtés de l'armature d'espacement (40), un produit d'étanchéité (44) est formé en contact avec des nervures (21-1, 31-1) à la délimitation entre une partie centrale et une partie périphérique du séparateur d'anodes (20) ou du séparateur de cathodes (30) ; et
des surfaces de contact du produit d'étanchéité (44) et des nervures (21-1, 31-1) sont respectivement inclinées par rapport à une direction d'empilement depuis l'armature d'espacement (40) vers le séparateur d'anodes (20) ou le séparateur de cathodes (30).

7. Pile à combustible unitaire à polymère solide selon la revendication 1, dans laquelle :
le séparateur d'anodes (20) comporte un trou de collecteur de gaz combustible (16) et un trou de collecteur d'eau de refroidissement (17), et ne comporte pas de trou de collecteur de gaz oxydant (18) ; et
le séparateur de cathodes (30) comporte un trou de collecteur de gaz oxydant (18) et un trou de collecteur d'eau de refroidissement (17), et ne comporte pas de trou de collecteur de gaz combustible (16).
